# FASCICULE DE BREVET EUROPEEN

(11) **EP 4 186 729 B1**
(45) Date de publication et mention de la délivrance du brevet: **07.05.2025**
(21) Numéro de dépôt: 22204449.7
(22) Date de dépôt: 28.10.2022
(51) Int. Cl.: B60K 35/00, B60K 35/10, B60K 28/10, B60W 50/14, B60K 31/00, B60K 35/20, B60K 35/22, B60K 35/28, B60W 50/12

(54) **PROCÉDÉ DE SURVEILLANCE D'UNE FONCTION DE SÉCURITE D'UN VÉHICULE ET BOÎTIER D'INTERFACE CORRESPONDANT**
VERFAHREN ZUR ÜBERWACHUNG EINER SICHERHEITSFUNKTION EINES FAHRZEUGS UND ENTSPRECHENDE SCHNITTSTELLENBOX
METHOD FOR MONITORING A VEHICLE SAFETY FUNCTION AND CORRESPONDING INTERFACE BOX

(30) Priorité: 15.11.2021 FR 2112062
(43) Date de publication de la demande: 31.05.2023
(73) Titulaire: FOREZ BENNES, Champdieu 42600 (FR)
(72) Inventeur: DENIS, Sylvain, 42300 Villerest (FR); BOURRIN Rodolphe, 69740 Genas (FR)
(74) Mandataire: Cabinet Laurent & Charras

(56) Documents cités:
- US-B1- 9 403 437
- US-B2- 10 350 998
- US-B2- 7 639 148

## Description

### Domaine technique

L'invention se rapporte au domaine technique des véhicules, tels que du type utilitaires ou poids lourds, et en particulier au domaine des véhicules de transport de matériel tels que les camions et camions-bennes.

### Art antérieur

Il est connu dans le domaine technique des véhicules de transport de matériel d'équiper les véhicules d'éléments mobiles qui peuvent être dans une première position lors des phases de roulage du véhicule, et dans d'autres positions lors des étapes de chargement ou déchargement du matériel transporté par le véhicule.

Par exemple, les bennes de camions sont équipées de ridelles qui peuvent être abaissées pour le déchargement ou le bennage latéral. Un autre exemple est la barre anti-encastrement présente à l'arrière des camions, et qui peut être relevée lors d'un bennage arrière ou lors de la traction d'une remorque. Il peut également s'agir d'une bâche qui doit être repliée lors des opérations de chargement, et dépliée lors de la circulation, on encore de stabilisateurs rétractables ou des capots de coffres de rangement.

Toutefois, ces éléments mobiles doivent être remis en place et maintenus dans des positions conformes pour les phases de roulage, afin de remplir leur rôle sécuritaire ou prévenir des accidents. En effet, un élément mobile laissé dans une position de travail peut dépasser du gabarit du véhicule. Cet élément mobile peut être peu visible, de sorte que sa position est extrêmement accidentogène.

Plusieurs accidents de la circulation, souvent mortels, sont survenus entre des camions bennes dont la ridelle gauche était restée ouverte, et qui sont entrés en collision avec un véhicule roulant en sens contraire. La récurrence de ces accidents graves, ayant une cause racine similaire, ont conduit le législateur à imposer la surveillance du gabarit du véhicule, associée à la mise en place de contraintes :
- soit par l'émission d'alarmes dans la cabine du véhicule, telles que des alarmes sonores ou visuelles, si celui-ci reprend la circulation alors que ses éléments mobiles ne sont pas remis en place ;
- soit par le bridage de sa vitesse, tant que les éléments mobiles ne sont pas remis en place.

Ces méthodes visent à réduire ou à supprimer le risque d'accident mortel existant auparavant.

Toutefois ces véhicules, souvent des véhicules de chantiers, sont soumis à de nombreuses contraintes telles que des chocs, des vibrations, la corrosion, etc. Les dispositifs de surveillance mis en œuvre sont donc exposés à des pannes ou des défaillances, si bien que les fonctions de surveillance de ces véhicules peuvent fournir des faux positifs : par exemple, l'automate exécutant les fonctions de sécurité croit qu'une ridelle est restée ouverte, alors qu'il s'agit juste d'un capteur défaillant (fil coupé par exemple). Dans ce cas, le véhicule est bel et bien sécurisé puisque tous les éléments mobiles sont dans leur position rangée, cependant le conducteur, pour ramener le véhicule au dépôt :
- ne peut rouler qu'à une vitesse maximale prédéfinie et faible, par exemple 15km/h ; et/ou
- doit subir le signal d'alarme tout le long du trajet, ce qui est pénible.

Il est connu du document US9403437B1 un procédé de gestion d'une fonction de sécurité d'un véhicule. Cependant, ce procédé ne permet pas de résoudre les inconvénients précités.

### Exposé de l'invention

L'un des buts de l'invention est de pallier les inconvénients de l'art antérieur, en proposant un procédé de surveillance d'un véhicule qui permet d'assurer la protection collective attendue, et qui soit compatible avec des modes d'utilisation dégradés.

À cet effet, il a été mis au point un procédé de gestion d'une fonction de sécurité d'un véhicule :
- comprenant l'exécution d'un programme d'ordinateur programmé pour exécuter une fonction de sécurité susceptible d'identifier une défaillance de sécurité ;
- la survenue d'une défaillance de sécurité entrainant l'activation d'une contrainte, telle que l'émission d'une alarme ou un bridage de la vitesse du véhicule.

Selon l'invention, lorsque la contrainte est activée, le programme d'ordinateur propose la désactivation la contrainte, et la désactivation est enregistrée et horodatée au sein d'une base de données.

De cette manière, un conducteur du véhicule, s'il estime que la contrainte n'est pas justifiée, par exemple dans le cas d'un capteur défaillant conduisant la fonction de sécurité à fournir un faux-positif, peut prendre la responsabilité de désactiver la fonction de sécurité erronée, ce qui lui permet alors de circuler normalement.

L'enregistrement de la désactivation est horodaté afin de pouvoir vérifier, dans l'hypothèse malheureuse d'un accident, si la fonction de surveillance était activée ou non. L'horodatage permet également de satisfaire les exigences règlementaires en matière de sécurisation du véhicule. En fonction de l'horodatage constaté, et du planning d'utilisation du véhicule, il est possible de savoir quelle personne a engagé sa responsabilité lors de la désactivation de la contrainte de sécurité.

Avantageusement, la désactivation est annulée si on coupe le contact du véhicule afin qu'une désactivation ne soit pas oubliée, et que le conducteur soit incité à signaler la fonction de surveillance fournissant des faux-positifs dans le but que ce dysfonctionnement soit réparé.

Afin d'éviter une désactivation intempestive, la désactivation est réalisée en au moins deux étapes. La désactivation comprend par exemple une étape de mise en demeure de l'utilisateur, et la désactivation est soumise à la validation de la mise en demeure.

De manière à identifier plus particulièrement qu'il s'agit d'un élément dépassant du gabarit du véhicule, ou d'un élément n'assurant pas son rôle de sécurisation, la défaillance est l'inadéquation entre la position d'un élément mobile du véhicule et la situation du véhicule, c'est-à-dire que sa position n'est pas adaptée à la situation du véhicule.

En complément ou en alternative, afin d'identifier qu'il s'agit d'un problème de capteurs ou de matériel, la défaillance est un dysfonctionnement d'un dispositif de détection de la position de l'élément mobile.

Dans le but de renforcer la force probante des enregistrements, ceux-ci comprennent en outre des coordonnées GPS du véhicule au moment de la désactivation.

Avantageusement, les enregistrements sont effectués :
- dans une première base de données comprenant uniquement les enregistrements des désactivations ; et
- dans une seconde base de données comprenant les enregistrements des désactivations ainsi que des enregistrements d'autres événements du procédé, tels que des changements d'état de capteurs, ou des changements de résultats de calculs effectués par le programme d'ordinateur.

De cette manière, les enregistrements des désactivations sont doublés, ce qui sécurise la sauvegarde des données en cas de défaillance d'une des bases. De plus, l'enregistrement de la plus grande diversité possible d'événements au sein de la seconde base de données permet aux fabricants du véhicule de mieux comprendre le contexte d'utilisation du véhicule, et en particulier le contexte d'apparition des faux-positifs.

Afin d'augmenter encore la sécurisation de la sauvegarde des données, les données enregistrées sont transmises à une base de données distante, lors d'étapes de sauvegarde des données. Ce mode permet également de remonter des données d'utilisation directement auprès du fabricant du véhicule.

L'invention concerne également un boîtier d'interface configuré pour être installé sur un véhicule, et :
- destiné à être relié à des capteurs de l'élément mobile et/ou destiné à recevoir une information d'une situation de circulation ou d'intervention du véhicule ;
- destiné à être relié à des moyens de mise en œuvre d'une contrainte ;
- remarquable en ce qu'il comprend un programme d'ordinateur configuré pour mettre en œuvre le procédé selon les caractéristiques précitées.

Un tel boîtier permet de sécuriser des véhicules afin de les mettre en conformité avec les exigences de sécurité actuelles, tout en permettant de mettre en œuvre le procédé avantageux de l'invention.

Afin de diminuer le nombre de boutons et/ou de voyants à installer dans le véhicule à équiper, le boîtier d'interface comprend une interface graphique, de préférence tactile.

Pour que le conducteur reste conscient qu'il utilise son véhicule en mode dégradé, le programme est programmé pour afficher distinctement sur l'interface graphique un état activé ou désactivé de la fonction de sécurité.

Le programme est programmé pour afficher une liste des enregistrements horodatés des désactivations. Si une fonction est régulièrement ou trop souvent désactivée, cela indique qu'une maintenance doit être effectuée sur les moyens la mettant en œuvre, par exemple vérifier la connectique entre un capteur particulier et le boitier.

Afin que les alertes mises en œuvre soient graduées, le programme est programmé pour déterminer si le véhicule est en situation d'intervention ou en situation de circulation, et de préférence si le véhicule est en situation d'intervention, en situation de circulation ou en situation intermédiaire.

L'invention concerne également un véhicule équipé d'un boîtier selon les caractéristiques précitées.

### Brève description des dessins

[Fig.1] est un schéma en perspective, d'un véhicule équipé d'un boitier destiné à mettre en œuvre le procédé selon l'invention.
[Fig.2] est une illustration d'un boitier destiné à mettre en œuvre le procédé selon l'invention, dans une situation sécurisée.
[Fig.3] est une illustration d'un tel boitier dans une situation non sécurisée.
[Fig.4] est une illustration d'un tel boitier dans une situation de dysfonctionnement de capteurs.
[Fig.5] est une illustration d'un tel boitier dans une situation de mise en demeure.
[Fig.6] est une autre illustration d'un tel boitier dans une situation de mise en demeure.
[Fig.7] est une illustration d'un tel boitier dans une situation d'une fonction désactivée.
[Fig.8] est une illustration d'un tel boitier dans une situation d'interrogation des enregistrements.

### Description détaillée de l'invention

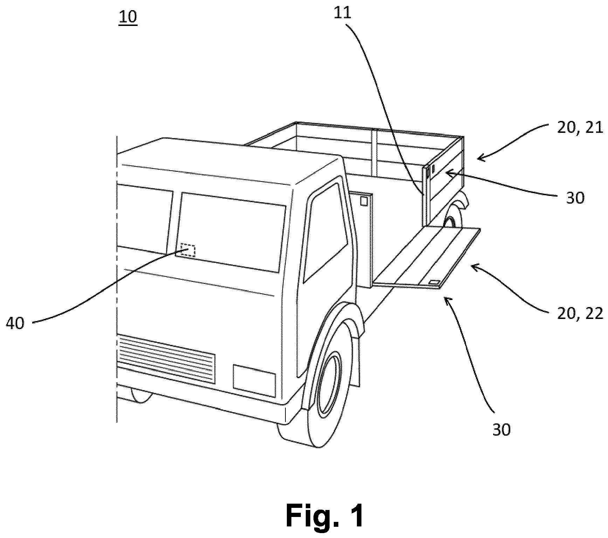

En référence à la figure 1, l'invention concerne un véhicule (10), de préférence à usage professionnel, et en particulier destiné au transport et à la manutention de charges tels que des matériaux, éventuellement en vrac, ou du matériel de construction. Ces véhicules sont généralement classés dans la catégorie des véhicules utilitaires ou des poids lourds.

Ce type de véhicules, tels qu'un camion benne ou camion grue, comprend un ou des éléments mobiles (20). Ces éléments mobiles (20) peuvent être, sans s'y limiter, des ridelles, des trappons, des portes arrière, des barres anti-encastrement, ou encore une grue.

Ces éléments mobiles (20) peuvent être mus manuellement, ou de préférence hydrauliquement. Ces éléments mobiles (20) sont utilisés lorsque le véhicule (10) est dans une situation d'intervention, par exemple sur chantier, lors d'une opération de chargement ou de déchargement de matériel sur le camion, ou encore de bennage.

De façon générale, ces éléments mobiles (20) ont une première position dite « position à détecter » (21), qui correspond à la position sécurisée que doit occuper l'élément mobile (20) lorsque le véhicule (10) est en situation de circulation, c'est-à-dire durant les phases de roulage sur route.

Durant ces phases, la vitesse du véhicule (10) peut être élevée et aucun élément ne doit dépasser du gabarit du véhicule (10) sous peine d'être accidentogène. En particulier, les véhicules poids lourd sont communément tenus de respecter, en France, une largeur maximum hors-tout de 2,55m.

Sur la figure 1, un des éléments mobiles (20) est dans une autre position (22) que celle dite sécurisée et à détecter, et dépasse du gabarit du véhicule (10). En cas de croisement avec un autre véhicule arrivant en sens contraire, l'élément (20) ouvert étant peu visible, le risque d'accident est élevé. La présence d'éléments mobiles (20) dans une autre position (22) rend donc le véhicule (10) non conforme à la circulation sur route en France.

Afin d'alerter le conducteur sur la position effective des éléments mobiles (20) avant qu'il ne reprenne la route, chaque élément mobile (20) coopère avec un dispositif de détection (30) configuré pour détecter si l'élément mobile (20) est dans sa position à détecter (21) et de sécurité ou dans une autre position (22).

Les dispositifs de détection (30) peuvent être de tous types appropriés, tels que des capteurs de présence inductif, des cellules de barrage optique, des codeurs de position, des inclinomètres, etc. Les dispositifs de détection (30) peuvent être fixés sur l'élément mobile (20), ou sur une partie fixe (11) du véhicule (10), selon le type d'élément mobile (20) à surveiller ou le type de capteur utilisé.

Un boîtier d'interface (40) est disposé dans l'habitacle du véhicule (10), et est relié à chaque dispositif de détection (30) installé sur le véhicule (10).

Dans le cas de véhicules (10) préexistants, le boîtier d'interface (40) est de préférence fixé sur le tableau de bord du véhicule (10) et alimenté par la batterie de celui-ci, de sorte qu'il s'allume et se met en route automatiquement au démarrage du véhicule (10). Le boitier d'interface (40) permet également d'avoir des interactions avec d'autres équipements du véhicule (10), dont par exemple l'électronique du véhicule (10) porteur, au moyen de connectivités d'entrée/sortie digitales et/ou bus CAN.

Dans le cas de véhicules (10) neufs, le boîtier (40) est directement le tableau de bord du véhicule (10). Dans ce cas, le boitier (40) a nativement accès aux autres données du véhicule (10).

De préférence, le boîtier d'interface (40) reçoit donc une pluralité d'informations du véhicule (10), telles que la vitesse, l'état activé ou inactivé du frein de parc ou de la prise de force.

Le boîtier d'interface (40) exécute un automate ou un programme d'ordinateur de manière à interpréter si le véhicule (10) est dans une situation d'intervention, en situation intermédiaire, ou en situation de circulation.

Si le frein de parc est activé et/ou si la prise de force est activée, alors le véhicule (10) est en situation d'intervention. Par prise de force on entend un système mécanique permettant de transmettre le couple d'un moteur à une alimentation hydraulique permettant de mettre en mouvement les éléments mobiles (20). Cette prise de force est destinée à adopter un état soit activé, soit inactivé. En effet, cette prise de force n'est activée par le conducteur que lors des opérations de manipulation des éléments mobiles (20), donc en situation d'intervention. L'état activé de la prise de force est donc l'indication que le conducteur souhaite déplacer ces éléments mobiles (20).

Si le frein de parc est désactivé, mais que la vitesse du véhicule est inférieure à un seuil prédéfini, par exemple 15 km/h, alors le véhicule (10) est dans une situation intermédiaire correspondant à une intention du conducteur de se déplacer, que le véhicule (10) soit en conformité ou non.

La situation intermédiaire peut être normale, si le conducteur doit déplacer son véhicule (10) au cours de l'intervention. Cela peut se produire s'il doit par exemple effectuer un bennage latéral dans une tranchée : le véhicule (10) doit avancer le long de la tranchée en même temps que la benne bascule, les ridelles étant ouvertes.

Mais la situation intermédiaire peut également être précurseur d'une circulation alors que le véhicule (10) n'est pas sécurisé, si l'intention du conducteur est de reprendre la route.

Si la vitesse du véhicule est supérieure au seuil prédéfini, alors le véhicule (10) est dans une situation de circulation. Le passage de la situation intermédiaire à la situation de circulation peut être soumis à un bridage du véhicule (10), s'il est équipé de cette option. Dans ce cas, le boitier (40) vérifie les états des capteurs (30), de manière à n'autoriser la circulation à une vitesse supérieure au seuil que si l'intégralité des éléments mobiles (20) sont dans leur position à détecter (21). Si ce n'est pas le cas, la fonction de sécurité associée à l'élément mobile (20) mal rangé met en œuvre une contrainte, qui est ici le bridage du véhicule (10) : la vitesse ne peut pas dépasser le seuil.

Sur les véhicules (10) n'étant pas équipés de la fonction de bridage, rien n'empêche le conducteur de circuler à une vitesse supérieure au seuil. La contrainte est alors l'émission, pilotée par le boitier (40), d'un signal d'alarme. L'alarme émise peut être sonore, en utilisant par exemple un avertisseur sonore émettant à un niveau de bruit compris entre 65 et 84 dB. L'alarme peut également être visuelle, en utilisant par exemple un afficheur tactile sur le boîtier d'interface (40) ou un avertisseur lumineux supplémentaire. Il peut bien entendu s'agir d'une combinaison d'alarme sonore et visuelle, le but étant d'apporter un niveau d'alerte progressif et mesuré.

Bien entendu, les contraintes peuvent être utilisées en association : sur un véhicule équipé de l'option bridage, une alarme peut être émise en complément.

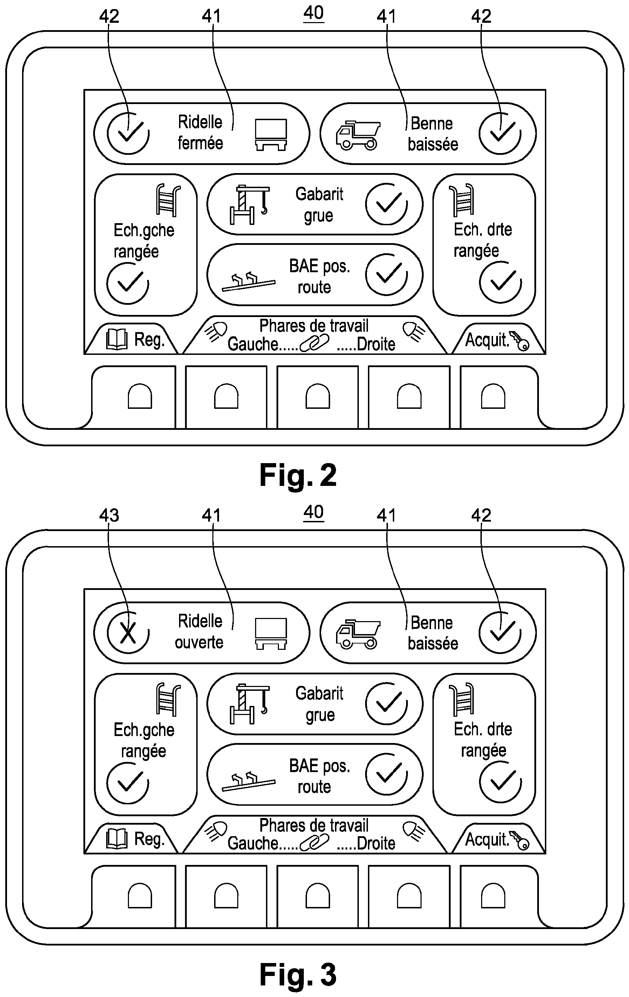

En référence à la figure 2, si tous les éléments mobiles (20) sont dans leur position à détecter (20), alors le véhicule (10) est sécurisé et l'affichage du boitier (40) indique que chaque fonction de sécurité fournit une sortie conforme, par exemple par l'affichage d'une coche verte (42) au niveau d'une représentation du statut (41) de chaque fonction de sécurité.

En référence à la figure 3, si un élément mobile (20) est dans une autre position (22), alors la fonction de sécurité associée fournit une sortie non conforme puisqu'il s'agit d'une défaillance de la fonction de sécurité. L'affichage est adapté :
- par exemple, au moyen d'une icône « attention » en orange, si le véhicule (10) est en situation intermédiaire ; ou
- au moyen d'une icône « non conforme » (43) ou « danger » de couleur rouge, si le véhicule est en situation de circulation.

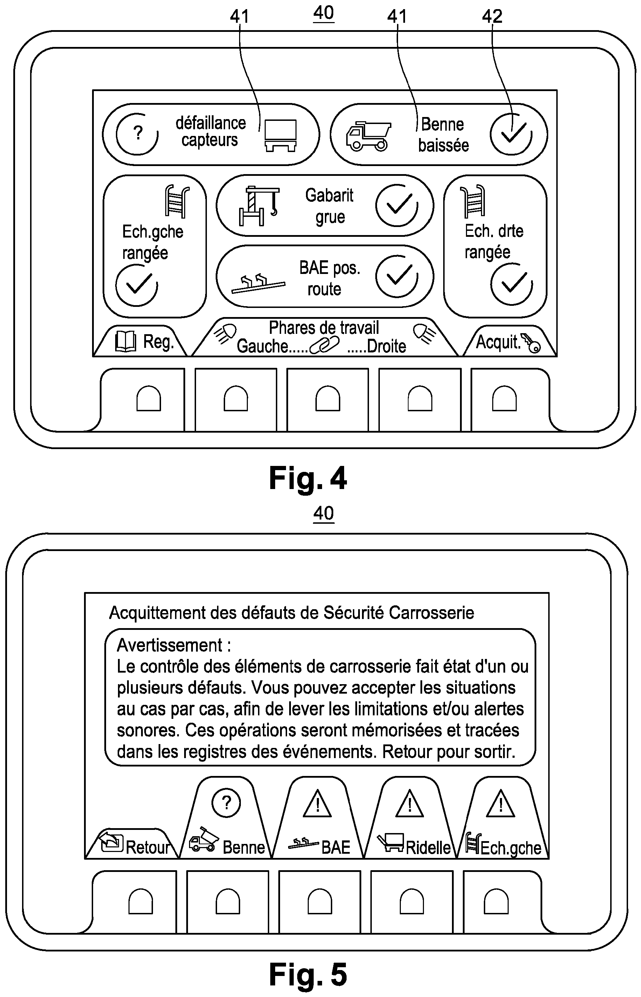

En référence à la figure 4, le programme d'ordinateur est programmé pour détecter si des capteurs (30) fournissent des informations non concordantes, ce qui est également considéré comme étant une défaillance de la fonction de sécurité.

Dans ce cas, les éléments mobiles sont chacun surveillés par au moins deux capteurs (30), de manière à vérifier, par équation logique, si ces deux capteurs (30) fournissent des informations cohérentes entre elles : si un des capteurs (30) indique que l'élément mobile (20) est dans la position à détecter alors que l'autre capteur (30) indique qu'il est dans une autre position (22), alors le boitier (40) interprète qu'un des capteurs dysfonctionne. Cette anomalie est rapportée au conducteur au moyen d'un affichage adapté sur le statut (41) de la fonction.

Lorsqu'une fonction de sécurité fournit une sortie non conforme, quelle qu'en soit la cause, alors la contrainte est actionnée et mise en œuvre, qu'il s'agisse du bridage du véhicule (10) et/ou de l'émission d'une alerte.

Si le conducteur juge que la sortie non conforme est un faux-positif, car l'élément mobile (20) indiqué comme étant mal rangé est bel et bien dans la position à détecter (21), le conducteur peut prendre la responsabilité de désactiver la fonction de sécurité associée à cet élément mobile (20), dans le but de lever la contrainte.

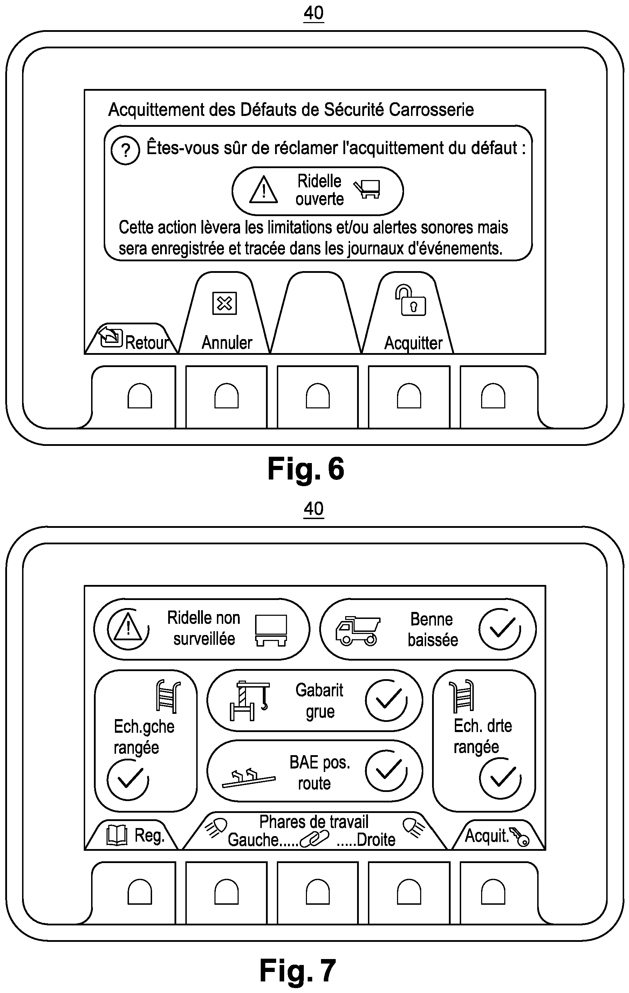

En référence aux figure 5 et 6, la désactivation est de préférence effectuée en plusieurs étapes, afin d'éviter une désactivation intempestive, par exemple en faisant un faux mouvement ou en cliquant par mégarde sur une interface graphique tactile du boitier (40).

Ces étapes de mise en demeure comportent une alerte à l'attention du conducteur, afin de le sensibiliser à sa responsabilité quant à l'utilisation du véhicule (10) sans que l'intégralité des fonctions de sécurité ne soient actives. Si le conducteur juge que la désactivation est justifiée, son action est considérée comme volontaire par la validation de la mise en demeure.

En référence à la figure 7, une fois que la fonction de sécurité est désactivée, celle-ci est en permanence rappelée au conducteur au moyen de l'interface. Bien que la fonction de sécurité soit désactivée, le conducteur ne doit pas croire que l'absence de la contrainte signifie que le véhicule (10) est conforme à la circulation : il incombe au conducteur de vérifier lui-même si les éléments mobiles (20) restent dans leur position à détecter (21) tout le long du trajet qu'il faut effectuer.

De préférence, l'affichage du boitier (40) est en permanence le statut (41) des fonctions de surveillance, et le programme d'ordinateur est programmé pour que l'affichage du boitier (40) revienne automatiquement à l'affichage des statuts (41) si jamais le conducteur ne fait pas de saisie sur le boitier (40) au terme d'un délai prédéfini, par exemple 5 secondes.

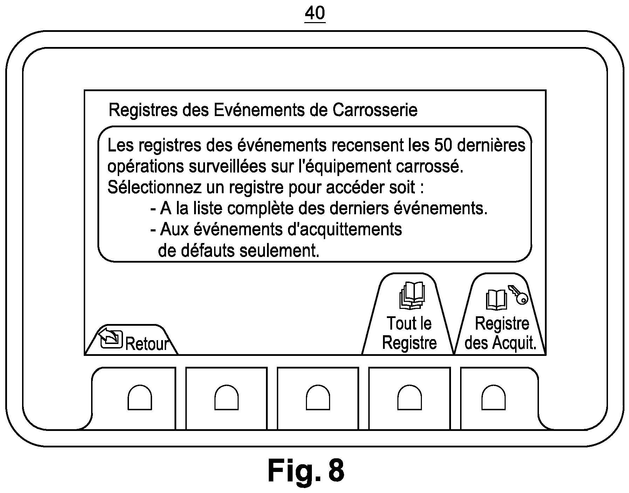

En référence à la figure 8, le programme d'ordinateur est programmé pour que l'interface graphique affiche une liste des dernières désactivations, par exemple classées par ordre chronologique décroissant. La consultation des dernières désactivations directement sur le boitier permet par exemple à un agent de maintenance, de vérifier quels peuvent être les besoins de réparations ou de maintenance à effectuer sur un véhicule.

Dans la mesure où le boitier (40) regroupe l'ensemble des fonctions de sécurité du véhicule (10), les dysfonctionnements de l'intégralité des capteurs (30) peuvent être vérifiés depuis le seul boitier (40), par la simple consultation du journal des désactivations.

Afin de garantir la sécurisation du véhicule (10), le programme est programmé pour que les désactivations soient annulées dans certains cas.

Premièrement, chaque coupure de contact du véhicule (10) annule toutes les désactivations. Par exemple lorsqu'on démarre le véhicule (10) et que le boitier (40) s'initialise, alors toutes les fonctions de sécurité sont activées par défaut.

Un autre exemple est lorsque la fonction de sécurité fournit une sortie conforme, ce qui est le cas lorsque l'élément mobile (20) est dans la position à détecter (21) et, le cas échéant, que les capteurs (30) fournissent des informations concordantes. Ce mode permet d'éviter qu'un conducteur peu scrupuleux désactive une fonction de sécurité alors qu'elle fonctionne correctement, dans le but de ne subir aucune contrainte lors de l'utilisation du véhicule, même s'il est dans une configuration non conforme à la circulation.

Enfin, on peut imaginer qu'une désactivation soit temporaire, selon un délai prédéfini, et qu'au terme de ce délai la désactivation soit annulée.

Les désactivations sont enregistrées au sein d'une base de données, et de préférence au sein de deux bases de données.

La première base de données est réservée à l'enregistrement des désactivations. Chaque enregistrement comporte à minima une identification de la fonction de sécurité qui est désactivée, et un horodatage. Avantageusement, l'enregistrement comprend d'autres données telles que la position GPS du véhicule.

Le nombre de lignes de la base de données est limité, de manière que lorsque ce nombre est atteint, c'est toujours l'enregistrement le plus ancien qui est écrasé par un nouvel enregistrement. Le volume de la base de données est ainsi maîtrisé, et il n'est pas nécessaire de prévoir une quelconque opération périodique de vidange de mémoire de la base de données.

La seconde base de données est plus complète et comprend les enregistrements du plus grand nombre d'informations possible issues du véhicule, tels que chaque changement d'état perçu par des entrées logiques du boitier (40), ou des résultats de tests effectuées par le programme d'ordinateur, tel que des tests de la concordance d'informations de capteurs (30). La vitesse instantanée du véhicule (10), le régime moteur, l'état de la prise de force, des éclairages, peuvent aussi être pris en compte.

L'objectif de cette seconde base de données est de contextualiser les situations éventuelles de défauts persistants ou d'accident. De manière similaire la taille de cette base de données est fixe, et lorsque le nombre maximal d'enregistrements est atteint, un nouvel enregistrement écrase le plus ancien enregistrement de la base.

La coupure de contact n'a pas d'effet sur la, ou les bases de données. Leur mémoire est permanente et persistante.

Le boitier (40) peut être équipé de moyens de communication et de transmission de données sans fil, par exemple par réseau de téléphonie mobile, afin que les données soient téléversées dans une base de données distante, qui peut être localisée chez l'exploitant du véhicule (10) à des fins de sauvegarde des données, ou chez le fabricant du véhicule (10) à des fins d'évaluation de la performance du matériel et d'amélioration continue.

Par ailleurs, le procédé et le boitier (40) peuvent être conformés différemment sans sortir du cadre de l'invention, qui est défini par les revendications. En particulier, le boitier (40) peut être du type d'une tablette tactile, ou encore être un boitier muni d'un moniteur et de boutons matériels, et être de tout type adapté à la présente application.

En outre, les caractéristiques techniques des différents modes de réalisation et variantes mentionnés ci-dessus peuvent être, en totalité ou pour certaines d'entre elles, combinées entre elles. Ainsi, le procédé et le boitier peuvent être adaptés en termes de coût, de fonctionnalités et de performance.

## Revendications

1. Procédé de gestion d'une fonction de sécurité d'un véhicule (10),
- comprenant l'exécution d'un programme d'ordinateur programmé pour exécuter une fonction de sécurité susceptible d'identifier une défaillance de sécurité ;
- la survenue d'une défaillance de sécurité entrainant l'activation d'une contrainte, telle que l'émission d'une alarme ou un bridage de la vitesse du véhicule (10) ; lorsque la contrainte est activée, le programme d'ordinateur proposant la désactivation de la fonction de sécurité,
**caractérisé en ce que** la désactivation est enregistrée et horodatée au sein d'une base de données.

2. Procédé selon la revendication 1, ***caractérisé en ce que*** la désactivation est annulée si on coupe le contact du véhicule (10).

3. Procédé selon l'une des revendications précédentes, ***caractérisé en ce que*** la désactivation est réalisée en au moins deux étapes, afin d'éviter une désactivation intempestive.

4. Procédé selon l'une des revendications précédentes,
***caractérisé en ce que*** la défaillance est du type :
- un élément mobile (20) du véhicule (10) n'est pas dans une position adaptée à la situation du véhicule (10) ;
- un dispositif de détection de la position (30) de l'élément mobile (20) dysfonctionne.

5. Procédé selon l'une des revendications précédentes, ***caractérisé en ce* que** l'enregistrement de la désactivation comprend en outre des coordonnées GPS du véhicule (10) au moment de la désactivation.

6. Procédé selon l'une des revendications précédentes, ***caractérisé en ce que*** les enregistrements sont effectués :
- dans une première base de données comprenant uniquement les enregistrements des désactivations ; et
- dans une seconde base de données comprenant les enregistrements des désactivations ainsi que des enregistrements d'autres événements du procédé, tels que des changements d'état de capteurs, ou des changements de résultats de calculs effectués par le programme d'ordinateur.

7. Procédé selon l'une des revendications précédentes, ***caractérisé en ce que*** les données enregistrées sont transmises à une base de données distante, lors d'étapes de sauvegarde des données.

8. Boîtier d'interface (40) configuré pour être installé sur un véhicule (10), et :
- configuré pour être relié à des capteurs et/ou destiné à recevoir une information d'une situation de circulation ou d'intervention du véhicule (10) ;
- configuré pour être relié à des moyens de mise en œuvre d'une contrainte ;
- configuré pour être relié à une base de données ;
***caractérisé en ce qu***'il comprend un programme d'ordinateur configuré pour mettre en œuvre le procédé selon l'une des revendications précédentes.

9. Boîtier d'interface (40) selon la revendication 8, ***caractérisé en ce qu***'il comprend une interface graphique, de préférence tactile.

10. Boîtier (40) selon la revendication 9, ***caractérisé en ce que*** le programme est programmé pour afficher distinctement sur l'interface graphique un état activé ou désactivé de la fonction de sécurité.

11. Boitier (40) selon l'une des revendications 8 à 10, ***caractérisé en ce que*** le programme est programmé pour afficher une liste des enregistrements horodatés des désactivations.

12. Boitier (40) selon l'une des revendications 8 à 11, ***caractérisé en ce que*** le programme est programmé pour déterminer si le véhicule (10) est en situation d'intervention ou en situation de circulation, et de préférence si le véhicule (10) est en situation d'intervention, en situation de circulation ou en situation intermédiaire.

13. Véhicule (10) équipé d'un boîtier (40) selon l'une des revendications 8 à 12.

## Patentansprüche

1. Verfahren zur Verwaltung einer Sicherheitsfunktion eines Fahrzeugs (10),
- umfassend die Ausführung eines Computerprogramms, das programmiert ist, um eine Sicherheitsfunktion auszuführen, die in der Lage ist, eine Sicherheitsfehlfunktion zu identifizieren;
- das Auftreten einer Sicherheitsfehlfunktion führt zur Aktivierung einer Einschränkung, wie zum Beispiel der Ausgabe eines Alarms oder der Begrenzung der Geschwindigkeit des Fahrzeugs (10);
wenn die Einschränkung aktiviert ist, schlägt das Computerprogramm die Deaktivierung der Sicherheitsfunktion vor, **dadurch gekennzeichnet, dass** die Deaktivierung in einer Datenbank aufgezeichnet und mit einem Zeitstempel versehen wird.

2. Verfahren nach Anspruch 1, **dadurch gekennzeichnet, dass** die Deaktivierung aufgehoben wird, wenn das Fahrzeug (10) ausgeschaltet wird.

3. Verfahren nach einem der vorhergehenden Ansprüche, **dadurch gekennzeichnet, dass** die Deaktivierung in mindestens zwei Schritten erfolgt, um eine unbeabsichtigte Deaktivierung zu vermeiden.

4. Verfahren nach einem der vorhergehenden Ansprüche, **dadurch gekennzeichnet, dass** die Fehlfunktion vom Typ ist:
- ein bewegliches Element (20) des Fahrzeugs (10) befindet sich nicht in einer für die Situation des Fahrzeugs (10) geeigneten Position;
- ein Positionsdetektionsgerät (30) des beweglichen Elements (20) funktioniert nicht ordnungsgemäß.

5. Verfahren nach einem der vorhergehenden Ansprüche, **dadurch gekennzeichnet, dass** die Aufzeichnung der Deaktivierung zusätzlich GPS-Koordinaten des Fahrzeugs (10) zum Zeitpunkt der Deaktivierung umfasst.

6. Verfahren nach einem der vorhergehenden Ansprüche, **dadurch gekennzeichnet, dass** die Aufzeichnungen durchgeführt werden:
- in einer ersten Datenbank, die ausschließlich die Aufzeichnungen der Deaktivierungen umfasst; und
- in einer zweiten Datenbank, die die Aufzeichnungen der Deaktivierungen sowie die Aufzeichnungen anderer Ereignisse des Verfahrens umfasst, wie zum Beispiel Zustandsänderungen von Sensoren oder Änderungen der Ergebnisse von Berechnungen, die durch das Computerprogramm durchgeführt werden.

7. Verfahren nach einem der vorhergehenden Ansprüche, **dadurch gekennzeichnet, dass** die aufgezeichneten Daten bei Datensicherungsmaßnahmen an eine entfernte Datenbank übertragen werden.

8. Schnittstellengehäuse (40), konfiguriert zur Installation auf einem Fahrzeug (10), und:
- konfiguriert zur Verbindung mit Sensoren und/oder zur Empfang einer Information über eine Verkehrssituation oder einen Einsatz des Fahrzeugs (10);
- konfiguriert zur Verbindung mit Mitteln zur Umsetzung einer Einschränkung;
- konfiguriert zur Verbindung mit einer Datenbank;
**dadurch gekennzeichnet, dass** es ein Computerprogramm umfasst, das konfiguriert ist, um das Verfahren nach einem der vorhergehenden Ansprüche umzusetzen.

9. Schnittstellengehäuse (40) nach Anspruch 8, **dadurch gekennzeichnet, dass** es eine grafische Schnittstelle, vorzugsweise eine berührungsempfindliche Schnittstelle, umfasst.

10. Schnittstellengehäuse (40) nach Anspruch 9, **dadurch gekennzeichnet, dass** das Programm programmiert ist, um auf der grafischen Schnittstelle deutlich einen aktivierten oder deaktivierten Zustand der Sicherheitsfunktion anzuzeigen.

11. Schnittstellengehäuse (40) nach einem der Ansprüche 8 bis 10, **dadurch gekennzeichnet, dass** das Programm programmiert ist, um eine Liste der mit Zeitstempel versehenen Aufzeichnungen der Deaktivierungen anzuzeigen.

12. Schnittstellengehäuse (40) nach einem der Ansprüche 8 bis 11, **dadurch gekennzeichnet, dass** das Programm programmiert ist, um zu bestimmen, ob sich das Fahrzeug (10) in einer Einsatzsituation oder in einer Verkehrssituation befindet, und vorzugsweise ob sich das Fahrzeug (10) in einer Einsatzsituation, in einer Verkehrssituation oder in einer Zwischenlage befindet.

13. Fahrzeug (10) ausgestattet mit einem Schnittstellengehäuse (40) nach einem der Ansprüche 8 bis 12.

## Claims

1. A method for managing a safety function of a vehicle (10),
- comprising the execution of a computer program programmed to execute a safety function capable of identifying a safety failure;
- the occurrence of a safety failure leading to the activation of a constraint, such as the emission of an alarm or a limitation of the vehicle's (10) speed;
when the constraint is activated, the computer program proposes the deactivation of the safety function, **characterized in that** the deactivation is recorded and timestamped within a database.

2. The method according to claim 1, **characterized in that** the deactivation is canceled if the vehicle's (10) ignition is turned off.

3. The method according to one of the preceding claims, **characterized in that** the deactivation is carried out in at least two steps, in order to avoid inadvertent deactivation.

4. The method according to one of the preceding claims, **characterized in that** the failure is of the type:
- a movable element (20) of the vehicle (10) is not in a position suitable for the vehicle's (10) situation;
- a position detection device (30) of the movable element (20) malfunctions.

5. The method according to one of the preceding claims, **characterized in that** the recording of the deactivation further includes GPS coordinates of the vehicle (10) at the time of deactivation.

6. The method according to one of the preceding claims, **characterized in that** the recordings are carried out:
- in a first database comprising only the recordings of deactivations; and
- in a second database comprising the recordings of deactivations as well as recordings of other events of the method, such as changes in sensor states, or changes in results of calculations performed by the computer program.

7. The method according to one of the preceding claims, **characterized in that** the recorded data is transmitted to a remote database during data backup steps.

8. An interface housing (40) configured to be installed on a vehicle (10), and:
- configured to be connected to sensors and/or intended to receive information from a traffic or intervention situation of the vehicle (10);
- configured to be connected to means for implementing a constraint;
- configured to be connected to a database;
**characterized in that** it includes a computer program configured to implement the method according to one of the preceding claims.

9. An interface housing (40) according to claim 8, **characterized in that** it includes a graphical interface, preferably touch-sensitive.

10. The housing (40) according to claim 9, **characterized in that** the program is programmed to distinctly display on the graphical interface an activated or deactivated state of the safety function.

11. The housing (40) according to one of claims 8 to 10, **characterized in that** the program is programmed to display a list of timestamped recordings of deactivations.

12. The housing (40) according to one of claims 8 to 11, **characterized in that** the program is programmed to determine whether the vehicle (10) is in an intervention situation or in a traffic situation, and preferably whether the vehicle (10) is in an intervention situation, in a traffic situation, or in an intermediate situation.

13. A vehicle (10) equipped with a housing (40) according to one of claims 8 to 12.
